# EUROPÄISCHE PATENTANMELDUNG

(11) **EP 4 442 490 A1**
(43) Veröffentlichungstag der Anmeldung: **09.10.2024**
(21) Anmeldenummer: 24163164.7
(22) Anmeldetag: 13.03.2024
(51) Int. Cl.: B60L 53/30, B60L 53/31

(54) **WANDLADESTATION ZUM ANSCHLIESSEN EINES LADEKABELS FÜR DIE VERBINDUNG MIT EINEM ELEKTROFAHRZEUG**

(30) Priorität: 06.04.2023 DE 102023108880
(71) Anmelder: Bender GmbH & Co. KG, 35305 Grünberg (DE)
(72) Erfinder: MORICH, Rolf, 12167 Berlin (DE); MORICH, Lars, 65604 Elz (DE); WEYRAUCH, Robert, 10439 Berlin (DE); STREICHER, Holger, 01920 Lehndorf (DE)
(74) Vertreter: advotec.

(57) **Zusammenfassung**

Die Erfindung betrifft eine Wandladestation (2) mit einem Gehäuse (4) zur Wandmontage zum Anschließen eines Ladekabels für die Verbindung mit einem Elektrofahrzeug, gekennzeichnet durch eine Steckverbindung mit einer vorinstallierten, normgemäßen CEE-Wandsteckdose (6), wobei ein an dem Gehäuse (4) mittels einer angepassten, auswählbaren Adaptervorrichtung (5) befestigter CEE-Stecker (8) bei der Montage des Gehäuses (4) in die CEE-Wandsteckdose (6) eingreift, und mit einer wandmontierbaren Montagevorrichtung (10), welche Führungs- und Fixierungsstrukturen (16, 18) zum Aufsetzen und Fixieren des Gehäuses (4) aufweist.

## Beschreibung

Die Erfindung betrifft eine Wandladestation mit einem Gehäuse zur Wandmontage zum Anschließen eines Ladekabels für die Verbindung mit einem Elektrofahrzeug.

Im Zuge der Hinwendung zur Elektromobilität werden die Energiespeicher batterieelektrisch angetriebener Elektrofahrzeuge regelmäßig aufgeladen. Zur Bereitstellung einer ausreichenden Ladeinfrastruktur sind daher Ladeeinrichtungen zum Anschließen eines Ladekabels für die Verbindung mit einem Elektrofahrzeug erforderlich. Die Ladeeinrichtungen können als Wechselstrom-(AC) oder Gleichstrom-(DC) Ladeeinrichtungen in Form einer Ladestation mit einem oder mehreren Ladepunkten, einer Wandladestation (Wallbox) oder eines Ladekabels mit leitungsintegrierter Steuer- und Schutzeinrichtung für Standardsteckdosen (In-Cable Control Box - IC-CPD) ausgeführt sein. Beispielsweise werden im öffentlichen Raum, insbesondere entlang des Autobahnnetzes, DC-Schnellladestationen mit einer Vielzahl von Ladepunkten installiert. Im privaten Bereich hingegen bieten sich Wandladestationen an, deren Gehäuse für eine Befestigung an einer Gebäudewand oder an einer Säule vorgesehen sind. Die Wandladestation ist dazu mit einem Niederspannungskabel an das speisende Stromversorgungssystem innerhalb der Infrastruktur des jeweiligen Standortes angebunden. Lediglich bei Verwendung der In-Cable Control Box können vorhandene Standardstecker wie zum Beispiel ein CEE-Stecker benutzt werden. Da diese IC-CPD-Ladeleitung so konstruiert ist, dass sie auch unsachgemäß, beispielsweise mit einem Verlängerungskabel, verwendet werden kann, entspricht eine derartige Nutzung nicht den europäischen Normen EN 61851-1 und EN 62752 und birgt daher Sicherheitsrisiken in sich.

Um den sicherheitstechnischen Anforderungen zu genügen, ist die normgerechte Montage und die Konfiguration einer Wandladestation nur durch Fachbetriebe durchzuführen. Dabei erfolgt insbesondere bei der Installation in Tiefgaragen oder Parkhäusern oder bei Wohneinheiten mit einer Vielzahl von Ladepunkten der elektrische Anschluss der Wandladestation an das Stromversorgungsnetz je nach zeitlicher Präferenz des Stellplatzeigentümers zu unterschiedlichen Zeitpunkten und unabhängig von dem Zeitpunkt der Bereitstellung der elektrischen Gebäudeinstallation. In diesem Fall ist es erforderlich, dass ein Elektro-Fachbetrieb sowohl bei Installation der elektrischen Infrastruktur als auch mindestens ein weiteres Mal bei der Installation und Konfiguration der Wandladestation tätig wird.

Im Fall einer gleichzeitigen Komplettinstallation der Stromversorgungsinfrastruktur und der Wandladestationen können unnötige Investitionskosten entstehen, da nicht alle Nutzer zum gleichen Zeitpunkt eine Wandladestation benötigen. Zugleich wird das Risiko erhöht, dass die Ladeeinrichtungen zum Zeitpunkt der ersten Nutzung bereits veraltet sind. Sowohl bei einer Komplettinstallation als auch bei einer individuellen Installation zum Zeitpunkt der Erstnutzung fallen somit erhebliche Kosten an, die den angestrebten Ausbau einer geeigneten Ladeinfrastruktur verzögern können. Da in der Regel der Nutzer auch der Eigentümer der Wandladestation ist und bei einem Umzug eventuell die Wandladestation an anderer Stelle nutzen möchte, ist auch dann wiederum die Einschaltung eines Fachbetriebs erforderlich.

Sogenannte "Smart"-Wallboxen verfügen neben der zum Laden notwendigen Kommunikation mit dem Elektrofahrzeug auch über weitere Datenschnittstellen mit dem Backend-Anbieter um beispielsweise in ein Lastmanagement oder die Fernwartung eingebunden zu werden oder die Kostenabrechnung zu nutzen. Da diese Datenschnittstellen in der Regel eine Internetverbindung voraussetzen, ist neben der elektrischen Infrastruktur zur Stromversorgung auch eine IT-Infrastruktur zu installieren, die zusätzliche Kosten verursacht.

Den derzeit geltenden Normen und Sicherheitsvorschriften entsprechend dürfen Wandladestationen nur durch Fachbetriebe installiert werden. Ist allerdings bereits eine elektrische Infrastruktur mit einer CEE-Wandsteckdose vorhanden, könnte dort auch eine In-Cable Control Box als Ladeeinrichtung genutzt werden. Diese Ladebetriebsart erscheint allerdings vor dem Hintergrund der anerkannten und durch Normen festgelegten Qualitäts- und Sicherheitsstandards, insbesondere bei unsachgemäßer Nutzung, nicht empfehlenswert und stellt für das dauerhafte Laden eines Elektrofahrzeugs unter sicherheitstechnischen Aspekten keine Alternative zu einer normgerecht montierten Wandladestation dar.

Der vorliegenden Erfindung liegt somit die Aufgabe zugrunde, eine Wandladestation zu konstruieren, die in Verbindung mit einer vorhandenen elektrischen Gebäudeinfrastruktur unter Beachtung der normgemäßen elektrischen Sicherheitsvorschriften auch von einer Nichtfachkraft kostengünstig montiert werden kann.

Diese Aufgabe wird in Verbindung mit den Merkmalen des Oberbegriffs in Anspruch 1 gelöst durch eine Steckverbindung mit einer vorinstallierten, normgemäßen CEE-Wandsteckdose, wobei ein an dem Gehäuse mittels einer angepassten, auswählbaren Adaptervorrichtung befestigter CEE-Stecker bei der Montage des Gehäuses in die CEE-Wandsteckdose eingreift, und mit einer wandmontierbaren Montagevorrichtung, welche Führungs- und Fixierungsstrukturen zum Aufsetzen und Fixieren des Gehäuses aufweist.

Die Grundidee der vorliegenden Erfindung beruht darauf, unter Verwendung einer erfindungsgemäßen Montagevorrichtung ein zu der Montagevorrichtung passgenaues Gehäuse der Wandladestation während der Montage so auszurichten und zu befestigen, dass ein an dem Gehäuse montierter CEE-Stecker in eine an der Wand vormontierte CEE-Wandsteckdose eingreift.

In vorteilhafter Weise ermöglicht es die Erfindung somit, dass mittels der Montagevorrichtung die Installation einer Wandladestation an einer vormontierten (nicht zur Erfindung gehörigen) CEE-Wandsteckdose von einer Nichtfachkraft durchgeführt werden kann, ohne dabei geltende Normen und Sicherheitsvorschriften zu verletzen. Die Tätigkeit der Fachkraft beschränkt sich daher auf die Errichtung der Gebäude-Elektroinstallation mit der Standard-CEE-Wandsteckdose, während die Montage und die Konfiguration der Wandladestation einschließlich der erforderlichen Datenkommunikationsschnittstelle nachfolgend zu einem beliebigen Zeitpunkt von einem Laien durchgeführt werden kann. Dabei können beide Maßnahmen - die Installation der Stromversorgung durch den Fachbetrieb einerseits und die Montage der Wandladestation durch den Nichtfachmann andererseits - zeitlich entkoppelt und hinsichtlich der Nutzung der Wandladestation je nach Bedarf ausgeführt werden.

An dem Gehäuse der Wandladestation ist zur Herstellung einer elektrischen Kontaktierung mit der CEE-Wandsteckdose ein CEE-Stecker mittels einer Adaptervorrichtung befestigt. Die Adaptervorrichtung ist dabei an den verwendeten CEE-Stecker geometrisch angepasst, sodass den auf dem Markt verfügbaren Steckerausführungen eine entsprechende Auswahl von Adaptervorrichtungen gegenüber steht. Die Adaptervorrichtung bildet somit in wirtschaftlich vorteilhafter Weise die mechanische Schnittstelle zwischen dem Gehäuse und der - im Rahmen der Norm - verwendeten Hersteller-spezifischen Steckverbindung.

Bei dem Aufsetzen des Gehäuses auf die zuvor an einer Befestigungsfläche angebrachte Montagevorrichtung greift der auf der Adaptervorrichtung befestigte CEE-Stecker in die CEE-Wandsteckdose ein und stellt somit die elektrische Kontaktierung mit dem Stromversorgungssystem her.

Zum Aufsetzen und zur anschließenden Fixierung des Gehäuses auf die Montagevorrichtung weist die Montagevorrichtung Führungs- und Fixierungsstrukturen auf, die ein passgenaues Aufschieben und eine exakte Ausrichtung des Gehäuses sicherstellen.

Weiter weist die Montagevorrichtung Befestigungsstrukturen für eine Wandbefestigung auf.

Die Befestigungsstrukturen der Montagevorrichtung können als Befestigungslaschen mit Bohrungen ausgeführt sein, die zusammen mit geeigneten weiteren Befestigungsmitteln wie Schrauben oder Haken eine (Wand-)Montage der Montagevorrichtung an einer Befestigungsfläche (Wand) ermöglichen.

In weiterer Ausgestaltung sind die Führungs- und Fixierungsstrukturen der Montagevorrichtung als Führungsaufnahmen und Fixierungsausnehmungen ausgebildet.

Die Montagevorrichtung besitzt Führungsaufnahmen, die vorzugsweise innenliegend und beispielsweise als Bohrungen, Nuten oder Schienen ausgebildet sind und die mit korrespondierenden Führungselementen des Gehäuses (siehe unten) bei dem Aufsetzen des Gehäuses zu dessen Führung zusammenwirken.

Zudem weist die Montagevorrichtung Fixierungsausnehmungen auf, die beispielhaft seitlich und frontseitig angebracht sind und in die entsprechende Fixierungselemente des Gehäuses (siehe unten) in der Endstellung des Gehäuses eingreifen.

Weiter weist die Montagevorrichtung an ihrer Deckfläche eine Aussparung zur Aufnahme der CEE-Wandsteckdose auf.

In dieser Ausgestaltung umgibt die Montagevorrichtung die CEE-Wandsteckdose nicht vollständig geschlossen, sondern besitzt an ihrer Deckfläche eine Aussparung, durch die ein Gehäuseoberteil der CEE-Wandsteckdose mit dem zugeführten Niederspannungskabel in montiertem Zustand ragt.

Das Gehäuse weist zum Anbringen an der Montagevorrichtung Führungselemente zum Eingriff in die Führungsaufnahmen der Montagevorrichtung auf.

Beim Aufsetzen des Gehäuses auf die Montagevorrichtung wirken die Führungselemente des Gehäuses mit den Führungsaufnahmen der Montagevorrichtung zusammen und richten das Gehäuse so aus, dass der CEE-Stecker eine zuverlässige elektrische Steckverbindung mit der an der Befestigungsfläche (Wand) angebrachten CEE-Wandsteckdose herstellt. Die Führungselemente können beispielhaft als innenliegende Führungszapfen oder Führungsschienen ausgebildet sein.

Das Gehäuse weist Fixierungselemente zum Eingriff in die Fixierungsausnehmungen der Montagevorrichtung auf.

Im Zusammenwirken mit den Fixierungsausnehmungen der Montagevorrichtung weist das Gehäuse Fixierungselemente auf, die vorzugsweise als seitlich und frontseitig angebrachte Fixierungsnasen ausgebildet sind und das Gehäuse an der Montagevorrichtung verriegeln. Möglich sind auch andere Ausführungen der Fixierungsausnehmungen/Fixierungselemente - beispielsweise als Feder/Kugel- oder Feder/Bolzen-Kombination.

Das Gehäuse weist Befestigungsstrukturen für eine Wandbefestigung auf.

Nachdem das Gehäuse vollständig auf die zuvor an der (Wand-)Befestigungsfläche montierte Montagevorrichtung aufgesetzt wurde und an der Wandfläche aufliegt erfolgt die Befestigung des Gehäuses an der Wandfläche mittels eigener Befestigungsstrukturen im unteren Gehäusebereich. Als Wandfläche kann dabei auch eine geeignete Befestigungsfläche einer (Lade-)Säule oder Stele dienen.

In weiterer vorteilhafter Ausgestaltung weist die Wandladestation eine Datenkommunikationsschnittstelle auf.

Die Datenkommunikation erfolgt dabei vorzugsweise über drahtlose Übertragungssysteme (5G, WIFI oder Bluetooth) oder über Kommunikationssysteme, die die Datenübertragung über das Niederspannungskabel der vorhandenen Elektroinstallation, wie beispielsweise Powerline Communication (PLC) übertragen, sodass keine weiteren Datenkommunikationskabel erforderlich sind.

Des Weiteren weist die Wandladestation einen Bewegungssensor auf.

Der Bewegungssensor verhindert eine unsachgemäße Benutzung der Wandladestation. Beispielsweise kann ein Ladevorgang nicht gestartet werden, falls die Wandladestation nicht in bestimmungsgemäßer Lage, z.B. senkrecht, betrieben wird. Damit kann unter anderem verhindert werden, dass die Wandladestation beispielsweise liegend auf einem möglicherweise feuchten Untergrund betrieben wird.

Weiterhin weist die Wandladestation einen Temperatursensor auf.

Der Temperatursensor, welcher vorzugsweise unmittelbar an dem CEE-Stecker angeordnet ist, verhindert eine Überhitzung des Systems.

Weitere zweckmäßige Ausgestaltungsmerkmale werden anhand eines bevorzugten, in den Zeichnungen veranschaulichten Ausführungsbeispiels erläutert.

Dabei zeigen:
- **Fig. 1**: eine erfindungsgemäße Wandladestation in perspektivischer Ansicht in Einzelteildarstellung;
- **Fig. 2**: die zusammengebaute und befestigte Wandladestation in perspektivischer Ansicht;
- **Fig. 3**: die Wandladestation in Seitenansicht in Einzelteildarstellung;
- **Fig. 4**: die Wandladestation in Draufsicht;
- **Fig. 5**: die Wandladestation im Schnitt V-V aus Fig. 4;
- **Fig. 6**: die Wandladestation in Frontansicht; und
- **Fig. 7**: die Wandladestation im Schnitt VII-VII aus Fig. 6.

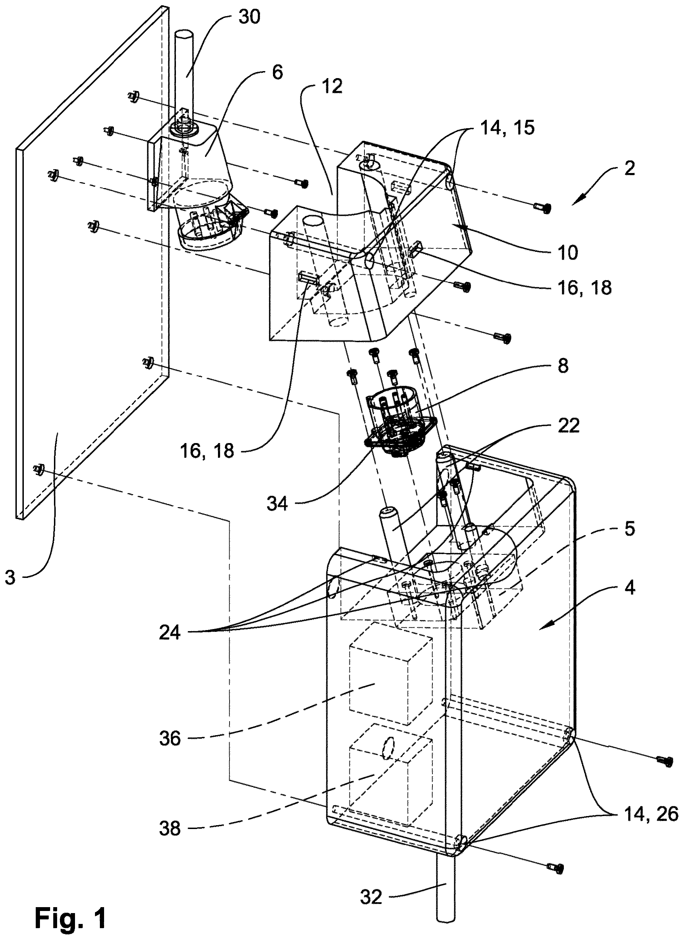

**Fig. 1** zeigt eine erfindungsgemäße Wandladestation 2 in perspektivischer Ansicht.

Vorausgesetzt wird dabei eine (nicht zu der Erfindung gehörende) von einer Elektrofachkraft an einer Befestigungsfläche 3 montierte CEE-Wandsteckdose 6, welche über ein Niederspannungskabel 30 mit einem Stromversorgungssystem verbunden ist. Für die Verbindung mit einem Elektrofahrzeug ist ein Ladekabel 32 über eine Steckverbindung oder fest verbunden aus einem Gehäuse 4 der Wandladestation 2 herausgeführt.

In der hier beispielhaft dargestellten Ausführungsform wird die CEE-Wandsteckdose 6 von einer mit einer Aussparung 12 versehenen Montagevorrichtung 10 umgeben. Alternativ kann die CEE-Wandsteckdose 6, insbesondere falls diese einen rückseitigen Anschluss für ein Installationskabel aufweist, auch vollständig von der Montagevorrichtung 10 und dem Gehäuse 4 abgedeckt sein oder die CEE-Wandsteckdose 6 kann oberhalb der Montagevorrichtung 10 unverdeckt montiert sein.

Mittels als Bohrungen ausgeführter Befestigungsstrukturen 14, 15 und entsprechenden Befestigungsmitteln, wie Schrauben, Bolzen oder Haken, ist die Montagevorrichtung 10 an der Befestigungsfläche 3 montiert.

Die CEE-Steckverbindung 6, 8 sowie die Übergänge zwischen Montagevorrichtung 10 und Gehäuse 4, als auch zu der Befestigungsfläche 3 sind gegen das Eindringen von Wasser geschützt und mit einem Ablauf für Kondenswasser versehen.

In das Gehäuse 4 ist der CEE-Stecker 8 mittels einer an die Geometrie des CEE-Steckers 8 angepassten Adaptervorrichtung 5 integriert.

Die zur Aufnahme des verwendeten CEE-Steckers 8 jeweils angepasste Adaptervorrichtung 5 ermöglicht die Verwendung einer Vielzahl von Hersteller-spezifischen CEE-Stecker 8 in Kombination mit dem stets gleichen Gehäuse 4.

Zudem kann die Adaptervorrichtung einen Öffnungsmechanismus zum automatischen Aufklappen eines Deckels der CEE-Wandsteckdose aufweisen. Angepasst an die verwendete und geeignet ausgestaltete CEE-Wandsteckdose besitzt die Adaptervorrichtung einen Öffnungsmechanismus, der beispielsweise als Hebelanordnung ausgeführt ist und der bei dem Aufsetzen des Gehäuses auf die Montagevorrichtung den Deckel der CEE-Wandsteckdose aufklappt, sodass die Kontaktbuchsen der CEE-Wandsteckdose die Kontaktstifte des CEE-Steckers aufnehmen können.

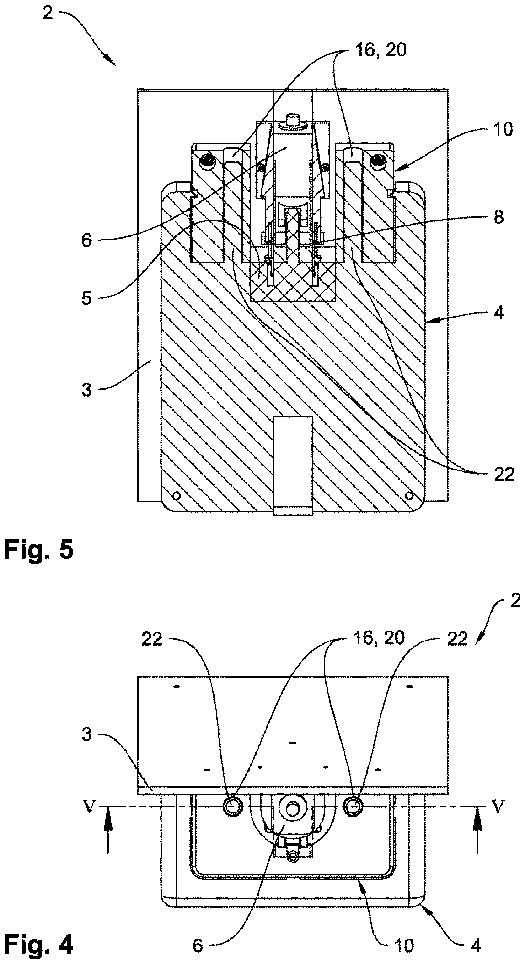

Mit Hilfe von Führungselementen 22, die hier als Führungszapfen 22 ausgebildet sind, wird das Gehäuse 4 auf die Montagevorrichtung 10 aufgeschoben, wobei die Führungszapfen 22 in entsprechende Führungsaufnahmen 16, 20 (Fig. 5) eingreifen und das Gehäuse 4 in seiner Endstellung an der Befestigungsfläche 3 zum Anliegen kommt. Zugleich wird eine elektrische Steckverbindung über die jeweiligen Kontakte zwischen der CEE-Wandsteckdose 6 und dem CEE-Stecker 8 hergestellt.

Unmittelbar an dem CEE-Stecker 8 ist ein Temperatursensor 34 angebracht, um eine mögliche Überhitzung bei dem Ladevorgang feststellen zu können.

Weiterhin sind in dem Gehäuse 4 eine Datenkommunikationsschnittstelle 36 zur Backend-Kommunikation sowie ein Bewegungssensor 38 zur Verhinderung einer unsachgemäßen Benutzung vorhanden.

Das Gehäuse 4 übergreift dabei in seinem oberen Gehäuseabschnitt die Montagevorrichtung 10, wobei das Gehäuse 4 bis zu einem Anschlag aufgeschoben wird und mit dem Fixierungsnasen 24 in die Fixierungsausnehmungen 16, 18 der Montagevorrichtung einrastet.

Anschließend wird das Gehäuse 4 seinerseits mittels als Bohrungen ausgeführter Befestigungsstrukturen 14, 26 und entsprechenden Befestigungsmitteln an der Befestigungsfläche 3 montiert.

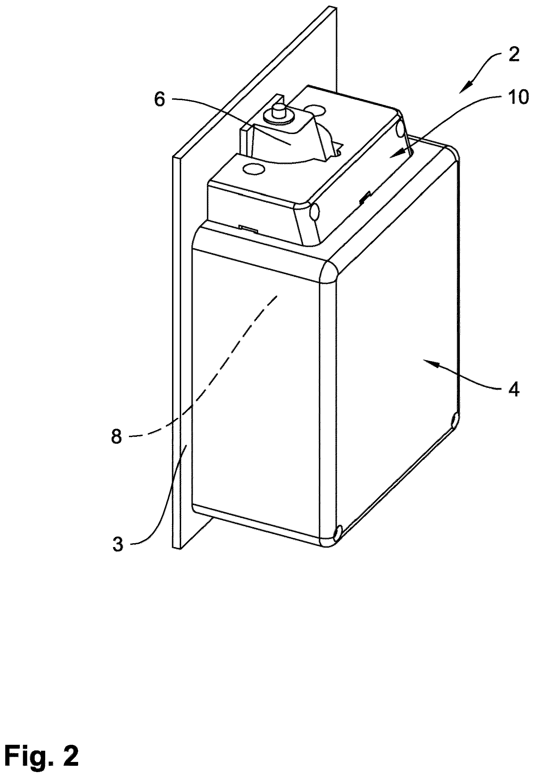

In **Fig. 2** ist die zusammengebaute und montierte Wandladestation 2 in perspektivischer Ansicht dargestellt.

Zu erkennen ist die teilweise Überdeckung der CEE-Wandsteckdose 6 durch die Montagevorrichtung 10, wobei ein oberer Teil der CEE-Wandsteckdose 6 durch die Aussparung 12 aus der Montagevorrichtung 10 herausragt. Weiterhin erkennbar ist die Überdeckung der Montagevorrichtung 10 durch einen oberen Teil des Gehäuses 4 mit dem Eingriff der Fixierungselemente 24 in die Fixierungsausnehmungen 16, 18 der Montagevorrichtung 10.

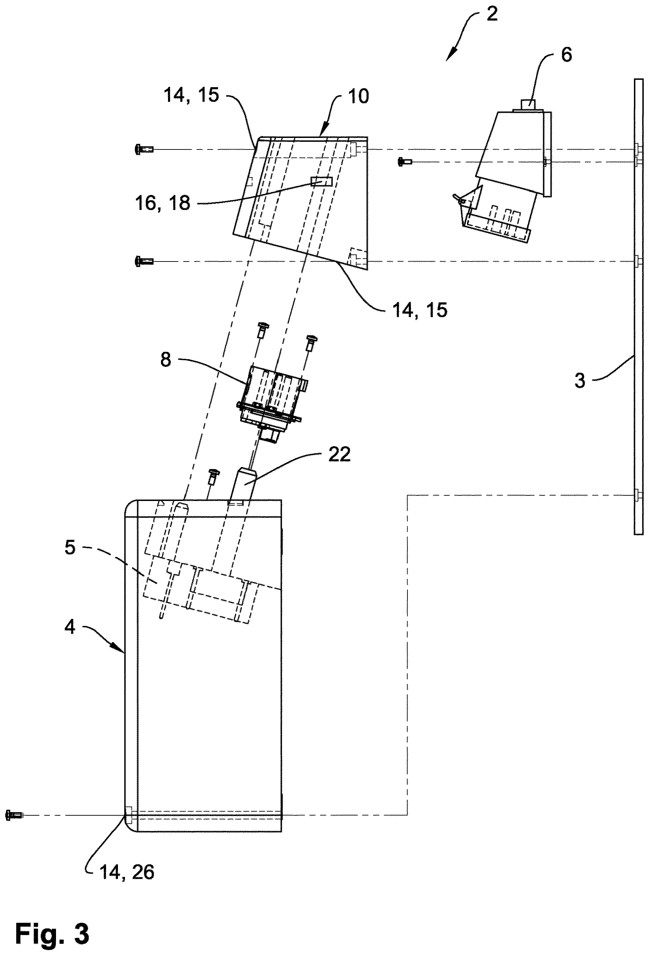

In **Fig. 3** ist die Wandladestation 2 in Seitenansicht in Einzeldarstellung gezeigt.

Zu sehen sind die angeformten, als Führungszapfen 22 ausgebildeten Führungselemente 22 sowie der mittels Adaptervorrichtung 5 an dem Gehäuse 4 befestigte CEE-Stecker 8. Der CEE-Stecker 8 ist dabei durch die Adaptervorrichtung 5 so ausgerichtet, dass dessen Kontaktstifte innerhalb vorgegebener Bauteiltoleranzen in die entsprechenden Kontaktbuchsen der CEE-Wandsteckdose 6 eingreifen.

Nach Aufschieben des Gehäuses 4 auf die Montagevorrichtung 10 ist das Gehäuse 4 in einem oberen Abschnitt mittels der Fixierungsausnehmungen 16, 18 der Montagevorrichtung 10 und der als Fixierungsnasen 24 ausgebildeten Fixierungselemente 24 des Gehäuses 4 fixiert und wird in einem unteren Abschnitt mit Befestigungsstrukturen 14, 26 und entsprechenden Befestigungsmitteln an der Befestigungsfläche 3 befestigt.

**Fig. 4** zeigt die Wandladestation 2 in Draufsicht und **Fig. 5** die Wandladestation 2 im Schnitt V-V aus Fig. 4.

In der Schnittdarstellung V-V der Fig. 5 sind die Führungselemente/Führungszapfen 22 des Gehäuses 4 zu erkennen, die in entsprechende Führungsaufnahmen 16, 20 der Montagevorrichtung 10 eingreifen und so eine Führung im Winkel der CEE-Wandsteckdose 6 ermöglichen.

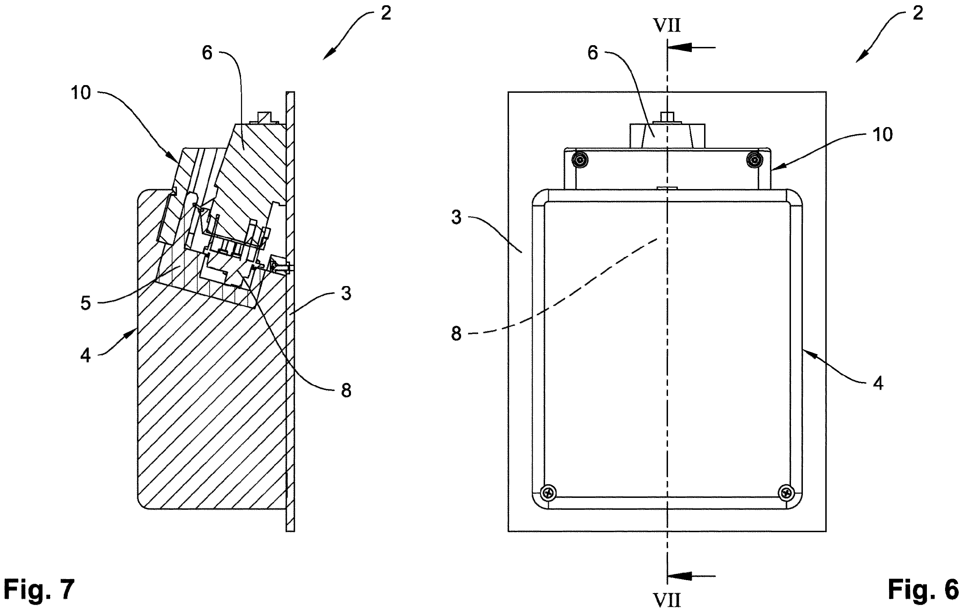

**Fig. 6** zeigt die Wandladestation 2 in Frontansicht und **Fig. 7** die Wandladestation im Schnitt VII-VII aus Fig. 6.

In Fig. 7 ist der auf der Adaptervorrichtung 5 sitzende CEE-Stecker 8 in Schnittdarstellung zu erkennen. Unter Ausgleich geringfügiger BauteilToleranzen wird bei dem Aufsetzen des Gehäuses 4 eine sichere elektrische Kontaktierung des CEE-Steckers 8 mit der CEE-Wandsteckdose 6 hergestellt. Neben der mechanischen Ausrichtung und Fixierung ist somit auch die zuverlässige elektrische Steckverbindung gewährleistet.

## Patentansprüche

1. Wandladestation (2) mit einem Gehäuse (4) zur Wandmontage zum Anschließen eines Ladekabels (32) für die Verbindung mit einem Elektrofahrzeug,
**gekennzeichnet durch**
eine Steckverbindung mit einer vorinstallierten, normgemäßen CEE-Wandsteckdose (6), wobei ein an dem Gehäuse (4) mittels einer angepassten, auswählbaren Adaptervorrichtung (5) befestigter CEE-Stecker (8) bei der Montage des Gehäuses (4) in die CEE-Wandsteckdose (6) eingreift, und mit einer wandmontierbaren Montagevorrichtung (10), welche Führungs- und Fixierungsstrukturen (16, 18, 20) zum Aufsetzen und Fixieren des Gehäuses (4) aufweist.

2. Wandladestation nach Anspruch 1,
**dadurch gekennzeichnet,**
**dass** die Montagevorrichtung (10) Befestigungsstrukturen (14, 15) für eine Wandbefestigung aufweist.

3. Wandladestation nach Anspruch 1 oder 2,
**dadurch gekennzeichnet,**
**dass** die Führungs- und Fixierungsstrukturen (16, 18, 20) der Montagevorrichtung (10) als Führungsaufnahmen (16, 20) und Fixierungsausnehmungen (16, 18) ausgebildet sind.

4. Wandladestation nach einem der Ansprüche 1 bis 3,
**dadurch gekennzeichnet,**
**dass** die Montagevorrichtung (10) an ihrer Deckfläche eine Aussparung (12) zur Aufnahme der CEE-Wandsteckdose (6) aufweist.

5. Wandladestation nach einem der Ansprüche 1 bis 4,
**dadurch gekennzeichnet,**
**dass** das Gehäuse (4) zum Anbringen an der Montagevorrichtung (10) Führungselemente (22) zum Eingriff in die Führungsaufnahmen (16, 20) der Montagevorrichtung (10) aufweist.

6. Wandladestation nach einem der Ansprüche 1 bis 5,
**dadurch gekennzeichnet,**
**dass** das Gehäuse (4) Fixierungselemente (24) zum Eingriff in die Fixierungsausnehmungen (16,18) der Montagevorrichtung (10) aufweist.

7. Wandladestation nach einem der Ansprüche 1 bis 6,
**dadurch gekennzeichnet,**
**dass** das Gehäuse (4) Befestigungsstrukturen (14, 26) für eine Wandbefestigung aufweist.

8. Wandladestation nach einem der Ansprüche 1 bis 7,
**gekennzeichnet durch**,
eine Datenkommunikationsschnittstelle (36).

9. Wandladestation nach einem der Ansprüche 1 bis 8,
**gekennzeichnet durch**,
einen Bewegungssensor (38).

10. Wandladestation nach einem der Ansprüche 1 bis 9,
**gekennzeichnet durch**,
einen Temperatursensor (34).
